# FASCICULE DE BREVET EUROPEEN

(11) **EP 3 052 304 B1**
(45) Date de publication et mention de la délivrance du brevet: **23.08.2017**
(21) Numéro de dépôt: 14789324.2
(22) Date de dépôt: 03.10.2014
(51) Int. Cl.: B29C 70/48, B29C 43/36, B29B 11/16, B29B 13/06, B29L 31/08, B29K 21/00

(54) **PROCÉDÉ ET ENSEMBLE DE FABRICATION D'AUBE COMPOSITE**
VERFAHREN UND ANORDNUNG ZUR HERSTELLUNG EINES VERBUNDSCHAUFEL
METHOD AND ASSEMBLY FOR THE PRODUCTION OF A COMPOSITE BLADE

(30) Priorité: 04.10.2013 US 201361886678 P; 21.08.2014 FR 1457909
(43) Date de publication de la demande: 10.08.2016
(73) Titulaire: SNECMA, 75015 Paris (FR)
(72) Inventeur: MARCHAL, Yann, F-77550 Moissy-Cramayel Cedex (FR); ENGEL, Jeremy, Kearney, Nebraska 68847 (US); GIMAT, Matthieu, F-77550 Moissy-Cramayel Cedex (FR)
(74) Mandataire: Calvo de Nó, Rodrigo
(86) Numéro de dépôt international: PCT/FR2014/052512
(87) Numéro de publication internationale: WO 2015/049474

(56) Documents cités:
- EP-A1- 1 777 063
- DE-A1-102011 104 366
- FR-A1- 2 950 286
- US-A- 2 746 514

## Description

### DOMAINE TECHNIQUE

La présente divulgation concerne un procédé de fabrication d'une aube de turbomachine composite ainsi qu'un ensemble de compactage utilisé dans ce procédé. L'aube composite peut être du type comprenant une préforme en fils ou fibres tissé(e)s en trois dimensions et un liant maintenant la disposition relative entre les fils de la préforme. Ladite préforme peut être formée de fils de chaîne et de fils de trame, la direction des fils de chaîne formant la direction longitudinale de la préforme.

En particulier, la présente invention se rapporte à la fabrication d'une aube de soufflante pour une turbomachine, notamment un turboréacteur. Cependant, on envisage également dans le cadre de la présente invention de fabriquer une aube destinée à un compresseur basse pression où les températures atteintes en fonctionnement sont compatibles avec la résistance thermomécanique de ce type d'aube. Il est également possible de mettre en en oeuvre la présente invention pour des aubes de soufflante non carénée (ou « open rotor ») ou encore des aubes à plateforme intégrée.

### ARRIERE-PLAN

De manière habituelle, les aubes de soufflantes réalisées en matériau composite, en particulier en fibres de carbone, sont réalisées à partir d'un empilement de plis unidirectionnels préimprégnés que l'on place dans un moule en orientant différemment les plis successifs, avant compactage et polymérisation à l'autoclave. Cette technique très délicate requiert d'effectuer les opérations d'empilage de plis de manière manuelle, ce qui est long et coûteux.

Il a aussi été proposé de préparer des préformes tissées de fibres sèches qui sont ensuite assemblées par couture, avant une imprégnation par résine par injection dans un moule fermé. Une alternative a consisté à réaliser une seule préforme tissée qui est montée avec un ou plusieurs inserts pleins avant injection. Ces solutions (fascicules de brevet US 5 672 417 et US 5 013 216) présentent toutefois l'inconvénient de nécessiter l'assemblage de plusieurs pièces et de créer dans ces zones d'assemblage, des sites privilégiés de fragilité, par exemple de délaminage, ce qui est très néfaste en termes de résistance mécanique, notamment pour la tenue aux impacts.

Pour surmonter ces inconvénients, le document FR 2 861 143 a proposé de réaliser une préforme en fils ou fibres tissé(e)s en trois dimensions permettant de former à elle seule, après découpe éventuelle et injection du liant, la pièce finale formant toutes les parties de l'aube de turbomachine, sans recourir à l'utilisation d'inserts ou de tout autre élément rapporté. En particulier, on utilise le procédé de fabrication présenté dans le document FR 2 892 339, qui divulgue un ensemble de compactage selon le préambule de la revendication 1 et un procédé de fabrication selon le préambule de la revendication 4, au cours duquel la préforme tissée puis découpée est mise en forme dans un moule avant d'injecter le liant et de procéder au durcissement de ce dernier. Un ensemble de compactage et procédé de fabrication utilisant cet ensemble sont aussi divulgués dans le document DE 10 2011 104 366 A1. Cependant, il persiste aujourd'hui un certain nombre de problème liés à la manière dont cette mise en forme est réalisée.

### DESCRIPTION GENERALE

La présente divulgation a pour objectif de fournir un ensemble de compactage permettant d'éviter les inconvénients susmentionnés. En particulier, cet ensemble de compactage permet de réaliser un pré-compactage de la préforme.

L'ensemble de compactage peut être utilisé pour une préforme obtenue par tissage en trois dimensions de fils et destinée à former une aube de turbomachine composite, ladite préforme comprenant à la fois la pale, le pied de l'aube et, entre la pale et le pied, l'échasse de l'aube.

Cet ensemble de compactage comprend les caractéristiques de la revendication 1. La présente divulgation porte également sur un procédé de fabrication d'une aube de turbomachine composite, utilisant un ensemble de compactage selon la revendication 4.

### DESCRIPTION DES DESSINS

D'autres avantages et caractéristiques de l'invention ressortiront à la lecture de la description suivante faite à titre d'exemple et en référence aux dessins annexés dans lesquels :
- la figure 1 est une vue générale en perspective d'une préforme, après découpage,
- la figure 2 illustre une étape d'un exemple de procédé de fabrication,
- les figures 3 et 4 sont des vues en coupe selon les directions III et IV de la figure 2 montrant l'effet du compactage sur le profil de deux portions différentes de la préforme, avec un ensemble de compactage selon un premier mode de réalisation de l'invention
- la figure 5 est une vue partielle de la préforme de la figure 1, montrant de façon agrandie le pied et l'échasse,
- la figure 6 est une vue en coupe analogue à celle de la figure 4, avec un ensemble de compactage selon un deuxième mode de réalisation de l'invention,
- la figure 7 est une vue en perspective de l'outil de compactage de l'ensemble de compactage de la figure 6

### DESCRIPTION DETAILLEE

Dans la description détaillée qui suit, il est fait référence aux dessins annexes montrant des exemples d'ensemble de compactage ou des exemples de procédé de fabrication. L'intention est que ces exemples soient considérés comme uniquement illustratifs, l'étendue de l'invention n'étant pas limitée à ces exemples.

Dans un mode de réalisation illustratif, le procédé de fabrication débute par une première étape a) consistant à réaliser une préforme tridimensionnelle 10 par tissage, la préforme tissée comportant des fils de chaîne 20a et des fils de trame 20b. Dans ces deux groupes de fils, on prévoit des fils traceurs 22 identifiables visuellement des autres et situés régulièrement au moins à la surface de la préforme.

Les fils de chaine et de trame appartiennent au groupe formé des fibres de carbone, des fibres de verre, des fibres de silice, des fibres de carbure de silicium, des fibres d'alumine, des fibres aramides et des fibres de polyamides aromatiques.

Cette préforme tissée d'une seule pièce est ensuite découpée conformément à une deuxième étape b) du procédé. Plus exactement, cette préforme tissée est détourée par découpage du contour d'après une abaque tridimensionnelle prédéterminée prévue pour qu'après la déformation, la préforme respecte la géométrie de la pièce finie. Cette découpe peut être réalisée par jet d'eau et/ou par des moyens mécaniques (ciseaux, cutter, scie....) et/ou par découpe au laser.

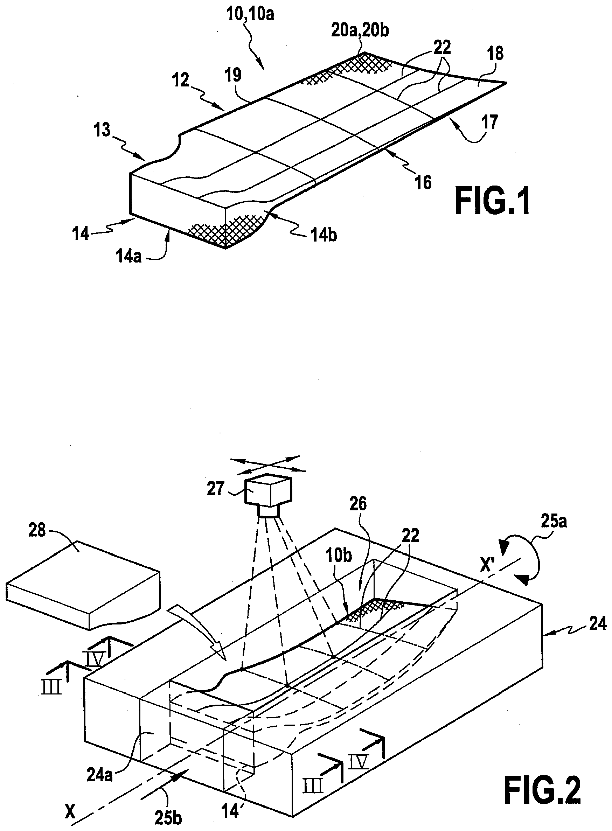

On aboutit à une préforme découpée 10a telle que visible sur la figure 1. On retrouve les parties destinées à former la pale 12 et le pied 14 de l'aube, ainsi que l'échasse 13 qui est la partie de transition entre la pale 12 et le pied 14. En particulier, les fils de chaîne 20a et les fils de trame 20b utilisés pour le tissage en trois dimensions sont des fibres de carbone (noires) et des fibres de verre ou en kevlar (blanches) forment des fils traceurs 22 situés essentiellement à la surface de la préforme, le long de la direction principale longitudinale parallèle aux fils de chaîne 20a et le long de la direction transversale parallèle aux fils de trame 20b. De cette façon, les fils traceurs 22 apparaissent de couleur blanche sur le reste de la préforme qui est noire, et les fils traceurs 22 sont donc très visibles. En plus, ces fils traceurs sont détectables par les technologies classiques de contrôle non destructif (type tomographie par rayons X ou par ultrasons) permettant de vérifier la conformité de la pièce finale.

En particulier, ces fils traceurs 22 sont présents ici en surface des deux faces (respectivement destinées à former la paroi d'intrados 17 et la paroi d'extrados 18) de l'aube à des emplacements prédéterminés afin de servir de point de référence pour le positionnement en vue de la découpe et d'autres étapes de traitement de la préforme comme il sera exposé ci-après.

Lors de cette étape de découpe, il est prévu de conserver une série de fils traceurs 22 situés à la surface de la préforme le long d'au moins une face de référence 16, qui dans le cas illustrée est la face destinée à former le bord d'attaque.

Ensuite, on réalise une étape c) dans laquelle on réalise une prédéformation de la préforme découpée 10a.

Plus précisément, pendant l'étape c) on réalise ladite prédéformation en plaçant la préforme découpée 10a dans un moule de conformation 24 (figure 2) présentant différentes parties délimitant entre elles une cavité ou logement 26 destiné à loger la préforme découpée 10a et présentant des marques servant de référence pour le positionnement d'au moins certains des fils traceurs 22.

Différents systèmes de repérage et de positionnement de la préforme découpée 10a peuvent être utilisés, en particulier un projecteur laser 27 (voir la figure 2) qui projette un faisceau lumineux à l'emplacement idéal d'un fil traceur 22 de sorte qu'il est alors aisé de déplacer en conséquence le fil traceur 22 correspondant pour obtenir le positionnement prédéterminé.

Alternativement ou en supplément, des masques, reprenant le contour et/ou la position de tout ou partie des fils traceurs 22, peuvent être disposés sur la préforme afin de contrôler son bon positionnement.

Lorsqu'on dispose la préforme découpée 10a dans le moule de conformation 24, on place la préforme découpée 10a dans une configuration qui la déforme appliquant une rotation (flèche 25a sur la figure 2) autour d'un axe XX' parallèle à sa direction principale, ce qui a pour conséquence de vriller la pale autour de cet axe.

Dans certains cas, on peut aussi prévoir que le moule de conformation 24 présente une partie mobile 24a, coulissante et destinée à venir se positionner contre l'extrémité libre du pied 14 de la préforme afin de venir exercer une contrainte (flèche 25b sur la figure 2) réalisant la déformation souhaitée de cette portion 14 de la préforme, ou évitant certains types de déformation dans cette partie tandis qu'on exerce une déformation sur d'autres portions de la préforme 10b.

Il faut comprendre que de nombreuses possibilités différentes sont envisageables pour conformer la préforme découpée 10a grâce à l'utilisation des fils traceurs 22 comme éléments de référence pour positionner la préforme 10a dans le moule de conformation 24.

La stratégie de placement de la préforme découpée 10a dans le moule de conformation 24 est également liée au profil de découpe ou de détourage réalisé auparavant, selon la ou les surface(s) de référence choisie(s), en particulier parmi le pied, la tête, le bord d'attaque 16, le bord de fuite 19 ou toute autre zone prédéterminée.

On peut concevoir que la mise en place de la préforme découpée 10a dans le moule de conformation 24 soit suffisante pour réaliser l'ensemble des déformations nécessaires pour aboutir à la forme souhaitée finale. Cependant, dans certains cas, on peut également, avantageusement, réaliser cette étape c) en plusieurs sous étapes.

On injecte ensuite dans ledit moule d'injection un liant comprenant une résine thermodurcissable afin d'imprégner toute la préforme et de maintenir la disposition relative entre les fils de la préforme ; on chauffe ledit moule d'injection ; et on sort du moule une pièce moulée composite présentant sensiblement la forme et les dimensions de ladite aube.

Dans une une étape d), qui suit l'étape c) et avant de réaliser l'injection du liant, on réalise un pré-compactage d'au moins une portion de la préforme prédéformée 10b, comprenant le pied et de préférence le pied 14 et l'échasse 13, sur toute la largeur de la préforme prédéformée 10b. Ce pré-compactage bloque certaines fibres dans une position voulue, d'où une géométrie intermédiaire de la préforme, qui se rapproche encore davantage de la forme final voulue.

L'outil de compactage 28 utilisé à cet effet, visible schématiquement et partiellement sur la figure 2, peut être réalisé avantageusement en complétant le moule de conformation 24 par les équipements nécessaires. En effet, l'outil de compactage 28 est mobile (montée et descente) et doit pouvoir être porté à une température de l'ordre de 100 °C.

Au cours de cette étape d), ce sont les produits d'ensimage enrobant les fils et qui sont utilisés pour faciliter le tissage, qui permettent le blocage de la position relative des fibres de la portion pré-compactée.

Par la suite, on réalise un mouillage de la préforme pré-compactée 10c et on réalise un séchage en étuve, ce par quoi on fournit une préforme rigidifiée En fait, cette rigidification va figer de façon suffisante la conformation donnée lors de l'étape c) à la préforme découpée 10a, devenue la préforme prédéformée 10b, pour qu'on puisse la placer ultérieurement aisément dans le moule d'injection 24 sans modifier sensiblement sa forme qui correspond à celle de la pré-déformation précitée.

Si nécessaire, on peut éventuellement ajouter un tackifiant à l'intérieur de la préforme, par exemple une résine diluée, notamment de type époxyde, le tout étant de pouvoir, sous l'effet de la chaleur et de la pression qui s'exercent pendant l'étape de pré-compactage d), de coller entre elles les fibres de carbone tissées pour éviter que la préforme prédéformée 10b ne subisse une quelconque déformation ultérieure, notamment pendant l'étape d'injection.

L'outil de compactage 28 présente une forme et des dimensions qui lui permettent de s'insérer dans le logement 26 du moule de conformation 24 pour permettre de compacter la préforme tissée à un taux volumique de fibres intermédiaire par rapport au taux volumique de fibres définitif de la pièce finale. Par exemple, on vise à réaliser une préforme compactée avec l'outil de compactage 28 présentant un taux volumique de fibres compris entre 35% et 55%, de sorte que la pièce finale, après injection, présente un taux volumique de fibres compris entre 50% et 60%.

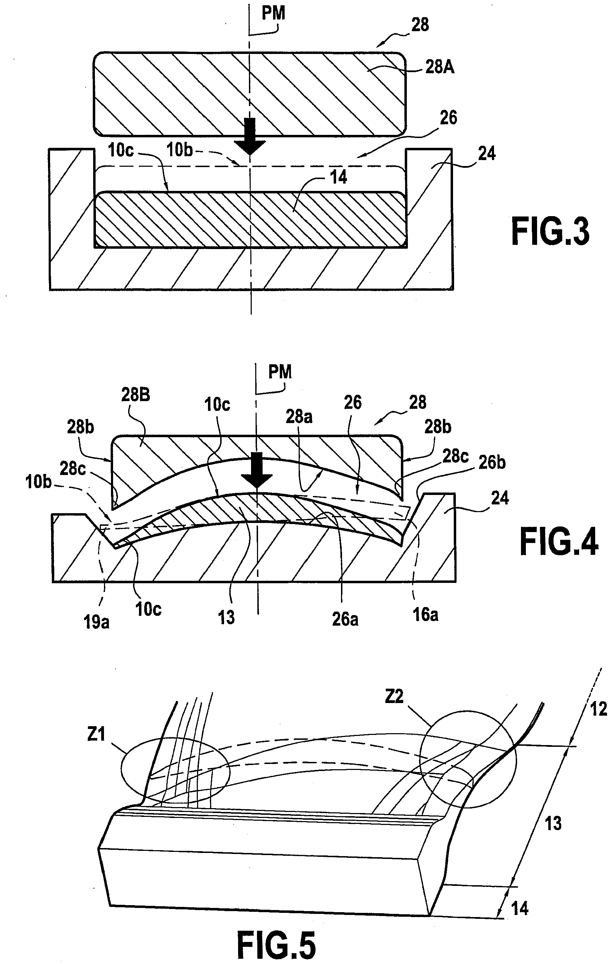

On se reporte sur les figures 3 et 4, représentant une coupe transversale de une préforme prédéformée et un ensemble de compactage selon un mode de réalisation de l'invention (moule de conformation 24 et outil de compactage 28). La figure 3 est une coupe transversale au niveau du pied 14, tandis que la figure 4 est une coupe transversale au niveau de l'échasse 13. Ces figures réprésentent la manière dont la prédéformation est appliquée sur ces parties différentes de la préforme prédéformée 10b (ligne en traits pointillés) et aboutir à la préforme compactée 10c (ligne en trait plein).

Pour le pied 14 (figure 3), le logement 26 du moule de conformation 24 présente une section rectangulaire et l'outil de compactage 28 présente une portion de pied 28A dont la section est rectangulaire complémentaire de celle du logement 26.

Pour l'échasse 13 (figure 4), le logement 26 du moule de conformation 24 présente une section avec un fond 26a convexe et des côtés 26b évasés en direction de l'ouverture du logement 26. L'outil de compactage 28 présente une portion d'échasse 28B dont la section comporte des côtés 28b sensiblement verticaux et un fond 28a, destiné à venir en regard du fond convexe du moule de conformation 24. Ce fond 28a est concave avec un profil présentant des rayons de courbure plus importants que le profil convexe du fond du logement 26 du moule de conformation 24.

L'outil de compactage 28 selon ce mode de réalisation est monobloc de sorte que lors de son mouvement, il descend (ou monte) tout entier dans (ou depuis) le logement 26 du moule de conformation 24, en comprimant ainsi la préforme prédéformée 10b.

Pour éviter d'abîmer les fibres de la préforme prédéformée 10b, et notamment de les pincer, les surfaces du moule de conformation 24 et l'outil de compactage 28 tournées vers le logement ne présentent aucune arête (saillante ou rentrante) abrupte mais sont constituées de faces avec des angles adoucis par des raccords arrondis ou rayonnés formant des congés.

Dans une telle situation, lorsque l'outil de compactage 28 descend, si l'on considère la portion d'échasse 28B venant compacter l'échasse 13 de la préforme (figure 4), ce sont en premier lieu les bords latéraux 16a et 19a de la préforme prédéformée 10b, destinés à former respectivement le bord d'attaque 16 et le bord de fuite 19, qui rentrent en contact avec l'outil de compactage 28 à l'emplacement des bords latéraux 28c du fond 28a. Ensuite, le contact se fait progressivement avec toute la surface de l'échasse 13 tournée en regard de l'outil de compactage 28, en finissant par la zone (bande) centrale de cette surface, passant par un plan médian PM de l'ensemble de compactage.

Ce plan médian PM, qui n'est pas forcément un plan de symétrie pour l'ensemble de compactage et pour la préforme, est vertical, parallèle à l'axe XX' orienté selon la direction principale de la préforme, et se trouve à mi-distance à la fois entre les bords latéraux 26b du logement 26 du moule de conformation 24 et entre les bords latéraux 28b de l'outil de compactage 28.

Cette configuration entraîne parfois certains inconvénients s'agissant de la pré-déformation de l'échasse 13 : ainsi, dans le cas des figures 4 et 5, les bords latéraux 16a et 19a de la préforme prédéformée 10b étant d'une part plus fins en épaisseur et subissant une flexion plus grande que le reste de l'échasse, les fibres 20 formant la préforme subissent un flambage, qui peut être préjudiciable à la bonne résistance thermomécanique de l'aube finale.

Les zones de la préforme découpée 10a qui subissent ce flambage indésirable sont indiquées sur la figure 5 au niveau des deux emplacements Z1 et Z2 correspondant aux bords fins de l'échasse 13 situés à proximité de la pale 12.

Afin d'éviter les inconvénients susmentionnés, l'outil de compactage de l'ensemble de compactage comporte au moins une portion de pied et en ce que ledit outil de compactage comporte au moins trois blocs de compactage séparés, parmi lesquels un bloc de compactage central passant par ledit plan médian et deux blocs de compactage latéraux situés aux extrémités latérales dudit outil de compactage, lesdits blocs de compactage étant aptes à descendre un à un en direction du moule de conformation de façon indépendante, en commençant par le bloc de compactage central.

De cette manière, l'outil de compactage peut être formé d'au moins trois parties, et on peut faire descendre ces parties à des moments différents, en commençant avec le bloc de compactage central qui descend en premier afin que le premier contact entre l'outil de compactage et la préforme découpée soit réalisée au niveau de la zone centrale de la surface de l'échasse tournée en regard de l'outil de compactage.

De cette manière, grâce à l'ensemble de compactage de l'invention, les bords latéraux de l'échasse de la préforme sont compactées en dernier lieu, ce qui permet de minimiser, voire d'éviter le flambage de fibres de ces zones de faible épaisseur lors du pré-compactage.

Ladite portion d'échasse peut comporter un nombre impair de blocs de compactage séparés, de façon à former une géométrie avec un bloc de compactage central passant par ledit plan médian et de part et d'autre de ce bloc de compactage central, un nombre identique d'autres blocs de compactage.

Cette solution présente aussi l'avantage supplémentaire, de permettre, en outre, de doser le niveau de pré-compactage exercée par chacune de ces blocs de compactage sur la préforme, qui peut se mesurer par le taux volumique de fibres intermédiaire résultant de ce pré-compactage.

Dans certains modes de réalisation, lesdits blocs de compactage sont aptes à descendre un à un en direction du moule de conformation selon un ordre qui compacte toute la largeur de ladite préforme en commençant par ledit bloc de compactage central puis chaque bloc de compactage adjacent à celui précédemment descendu, et ce jusqu'au bloc de compactage latéral.

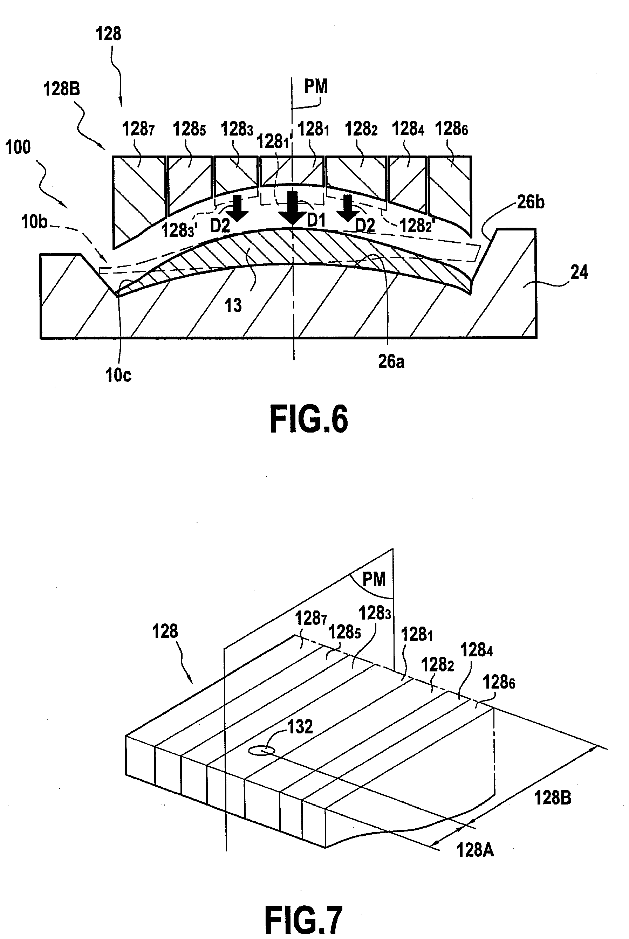

Dans certains modes de réalisation, ledit outil de compactage comporte une seule portion de pied. Dans d'autres modes de réalisation, l'outil de compactage comprend une portion de pied 128A et une portion d'échasse 128B, comme illustré sur la fig. 7.

Dans certains modes de réalisation, lesdits blocs de compactage sont aptes à descendre en direction du moule de conformation, en commençant par le bloc de compactage central, puis tous les blocs de compactage se trouvant sur l'un des côtés du plan médian, de préférence, un à un et de proche en proche depuis le bloc de compactage central jusqu'au deuxième bloc de compactage latéral.

Selon une autre alternative, lesdits blocs de compactage sont aptes à descendre en direction du moule de conformation de façon symétrique par rapport au plan médian.

Dans certains modes de réalisation, tout l'outil de compactage 128 est divisé en au moins trois blocs de compactage séparés, parmi lesquels un bloc de compactage central 128₁ passant par plan médian PM de l'outil de compactage 128, lesdits blocs de compactage étant aptes à descendre en direction du moule de conformation 24 de façon indépendante, en commençant par le bloc de compactage central 128₁.

Dans l'exemple des figures 6 et 7, tout l'outil de compactage 128 est divisé en sept blocs de compactage séparés 128₁, 128₂, 128₃, 128₄, 128₅, 128₆, 128₇, répartis autour et de part et d'autre du plan médian PM.

De cette façon, on peut décomposer le mouvement de descente de tout l'outil de compactage 128 (portion de pied 128A et portion d'échasse 128B), en commençant par le bloc de compactage central 128₁ passant par plan médian PM de l'outil de compactage 128 (flèche descendante D1 et ligne en traits pointillés 128₁' sur la figure 6), puis les deux blocs de compactage 128₂ et 128₃ situés de part et d'autre du bloc de compactage central 128₁ (flèches descendante D2 et D3 et lignes en traits pointillés 128₂' et 128₃' sur la figure 6), et ainsi de suite jusqu'aux deux blocs de compactage latéraux 128₆ et 128₇ situés aux extrémités latérales de l'outil de compactage 128.

Comme il est visible sur la figure 7, de façon optionnelle, l'outil de compactage 128 comporte au moins une fenêtre 132 permettant de visualiser la position d'au moins un fil traceur lorsque la préforme est placé dans le logement délimité entre le moule de conformation 24 et l'outil de compactage 28.

Cette fenêtre 132 est par exemple constituée d'une portion de l'outil de compactage 128 réalisée dans un matériau transparent, ou de préférence, une ouverture traversant toute l'épaisseur de l'outil de compactage 28.

Cette fenêtre 132 peut être disposée dans une zone de la portion d'échasse 128B qui est adjacente à la portion de pied 128A, de préférence au niveau du bloc de compactage central 128₁.

Une telle fenêtre 132 permet notamment de vérifier que le ou les fils traceurs 22 visibles par cette fenêtre (par exemple le fil traceur de sortie de portée) sont correctement positionnés et le restent pendant l'opération de compactage.

Dans l'exemple illustré sur les figures 6 et 7, l'outil de compactage 128 est divisé en sept blocs de compactage séparés 128₁, 128₂, 128₃, 128₄, 128₅, 128₆, 128₇.

Les blocs de compactage 128₁, 128₂, 128₃, 128₄, 128₅, 128₆, 128₇ peuvent aussi descendre pour compacter la préforme 10b avec des vitesses différentes et/ou des forces exercées par ces blocs de compactage sur la préforme qui sont différentes, d'où des niveaux de pré-compactage ou taux volumique de fibres intermédiaire résultant de ce pré-compactage qui sont différents entre les blocs de compactage 128₁, 128₂, 128₃, 128₄, 128₅, 128₆, 128₇.

Dans les exemples illustrés, il y a sept blocs de compactage 128₁, 128₂, 128₃, 128₄, 128₅, 128₆, 128₇, mais d'une façon générale, on peut en prévoir au moins cinq, par exemple exactement cinq.

Un procédé de fabrication d'une aube de turbomachine composite, peut comprendre les étapes suivantes :
a) on réalise une préforme par tissage en trois dimensions de fils 20a, 20b, 22, ladite préforme comprenant à la fois la pale 12, le pied 14 de l'aube et, entre la pale 12 et le pied 14, l'échasse de l'aube 13, les fils 20 comprenant des fils traceurs 22 identifiables visuellement disposés au moins à la surface de la préforme ;
b) on découpe ladite préforme en laissant intacte une série de fils traceurs 22 situés le long d'une face de référence 16 de la préforme, ce par quoi on fournit une préforme découpée 10a apte à prendre la forme et les dimensions des parties constitutives de l'aube ;
c) on prédéforme ladite préforme découpée 10a, ce par quoi on fournit une préforme prédéformée 10b ;
d) on réalise un pré-compactage de ladite préforme prédéformée 10b, ce par quoi on fournit une préforme pré-compactée 10c ;
e) on réalise un mouillage de la préforme pré-compactée 10c et on réalise un séchage en étuve, ce par quoi on fournit une préforme rigidifiée ;
f) on fournit un moule d'injection 24 dans lequel on place ladite préforme rigidifiée ;
g) on injecte dans ledit moule d'injection un liant comprenant une résine thermodurcissable afin d'imprégner toute la préforme prédéformée rigidifiée et de maintenir la disposition relative entre les fils 20a, 20b, 22 de la préforme rigidifiée ;
h) on chauffe ledit moule d'injection ; et
i) on sort du moule une pièce moulée composite présentant sensiblement la forme et les dimensions de ladite aube.

Pendant l'étape c) on réalise ladite prédéformation en plaçant la préforme découpée 10a dans le logement 26 délimité par un moule de conformation 24 et pendant l'étape d) on réalise ledit pré-compactage de ladite préforme prédéformée 10b en utilisant un outil de compactage 128 mobile et coopérant avec le moule de conformation 24 pour former un ensemble de compactage définissant une direction longitudinale et un plan médian PM vertical parallèle à la direction longitudinale.

Ainsi, de préférence, pendant l'étape d), l'outil de compactage 28 descend en direction du moule de conformation 24.

Selon une variante de mise en oeuvre préférentielle, ledit outil de compactage 128 est apte, lors de l'étape d), à compacter au moins le pied 12 de ladite préforme prédéformée 10b en commençant par le milieu et en allant progressivement jusqu'au bord de la préforme prédéformée 10b.

Ainsi, grâce à cette disposition avantageuse, on évite les flambages de fibres dans la zone de pied 12 et la zone d'échasse 13 de la préforme au cours de l'étape de compactage.

Dans ce procédé, ledit outil de compactage 128 est apte, lors de l'étape d), à descendre en direction du moule de conformation 24 de façon que lesdits blocs de compactage descendent un à un en direction du moule de conformation 24 selon un ordre qui compacte toute la largeur de ladite préforme 10b en commençant par sa portion centrale passant par le plan médian PM puis chaque portion adjacente à la précédente, en s'écartant progressivement du plan médian PM. Ledit outil de compactage 128 peut être apte, lors de l'étape d), à descendre en direction du moule de conformation 24 de façon symétrique par rapport audit plan médian PM.

Dans les figures, on a représenté le cas d'un pied 14 qui reste rectiligne tout au long du procédé de fabrication. On comprend que sans sortir du cadre de la présente invention, on peut envisager le cas d'un pied qui est vrillé, ou déformé selon toute autre action, lorsqu'on le place dans le moule de conformation 24.

Par ailleurs, selon une variante de réalisation non représentée, l'outil de compactage 128 couvre non seulement le pied 14 et l'échasse 13 de la pale, mais également une portion de la pale 12 de l'aube.

Egalement, dans la description qui précède, on a mentionné que l'outil de compactage 128 réalise une étape de pré-compactage, à savoir l'étape d). Cependant, il est également possible d'utiliser cet outil de compactage 128 alternativement comme élément du moule d'injection 24 et de l'utiliser seulement pour les étapes f) et g). Selon une autre variante, on peut utiliser ce même outil de compactage 128 à la fois pour l'étape d) de pré-compactage et pour les étapes f) et g).

Dans cette description, « comprends/comprenant » est entendu spécifier la présence de caractéristiques nommées, mais n'exclut pas la présence ou l'addition d'une ou plusieurs autres caractéristiques.

La description ci-dessus est donnée à titre d'exemple, et non limitation. Avec la divulgation ci-dessus, la personne du métier pourrait concevoir des variantes qui sont dans l'étendue de l'invention. Par ailleurs, les diverses caractéristiques des modes de réalisation ou exemples divulgués ici peuvent être utilisées seules ou en différentes combinaisons des unes avec les autres, et ne sont pas dirigées à être limitées aux combinaisons spécifiques ci-décrites.

## Revendications

1. Ensemble de compactage pour une préforme tissée obtenue par tissage en trois dimensions de fils (20) et destinée à former une aube de turbomachine composite, ladite préforme comprenant à la fois la pale (12), le pied (14) de l'aube et, entre la pale (12) et le pied (14), l'échasse de l'aube (13), l'ensemble de compactage comprenant un moule de conformation (24) délimitant un logement (26) ouvert vers le haut, apte à recevoir une préformé tissée, et un outil de compactage (128) verticalement mobile et coopérant avec le moule de conformation (24) pour former un ensemble de compactage permettant de compacter ladite préforme (10b) quand elle est placée dans le logement (26), **caractérisé en ce que** ledit outil de compactage (128) comporte au moins une portion de pied (128A), ledit ensemble de compactage définissant une direction longitudinale et un plan médian (PM) vertical parallèle à la direction longitudinale, l'outil de compactage (128) comprenant au moins trois blocs de compactage séparés (128₁-128₇), parmi lesquels un bloc de compactage central (128₁) passant par ledit plan médian (PM) et deux blocs de compactage latéraux (128₆, 128₇) situés aux extrémités latérales dudit outil de compactage (128), lesdits blocs de compactage étant aptes à descendre un à un en direction du moule de conformation (24) de façon indépendante, en commençant par le bloc de compactage central (128₁).

2. Ensemble de compactage selon la revendication 1, **caractérisé en ce que** lesdits blocs de compactage sont aptes à descendre un à un en direction du moule de conformation (24), en commençant par ledit bloc de compactage central (1281) puis chaque bloc de compactage adjacent à celui précédemment descendu, et ce jusqu'au bloc de compactage latéral (1286, 1287), de manière à compacter toute une largeur de ladite préforme (10b).

3. Ensemble de compactage selon l'une quelconque des revendications 1 ou 2, **caractérisé en ce que** l'outil de compactage (128) comporte au moins une fenêtre (132) permettant de visualiser la position d'au moins un fil traceur (22) lorsque la préforme est placé dans le logement (26)

4. Procédé de fabrication d'une aube de turbomachine composite, comprenant les étapes suivantes :
a) on réalise une préforme par tissage en trois dimensions de fils (20a, 20b, 22), ladite préforme comprenant à la fois la pale (12), le pied (14) de l'aube et, entre la pale (12) et le pied (14), l'échasse de l'aube (13), les fils (20a, 20b, 22) comprenant des fils traceurs (22) identifiables visuellement disposés au moins à la surface de la préforme ;
b) on découpe ladite préforme en laissant intacte une série de fils traceurs (22) situés le long d'une face de référence (16) de la préforme, ce par quoi on fournit une préforme découpée (10a) apte à prendre la forme et les dimensions des parties constitutives de l'aube ;
c) on prédéforme ladite préforme découpée (10a), ce par quoi on fournit une préforme prédéformée (10b) ;
d) on réalise un pré-compactage de ladite préforme prédéformée (10b), ce par quoi on fournit une préforme pré-compactée (10c) ;
e) on réalise un mouillage et un séchage de la préforme pré-compactée (10c), ce par quoi on fournit une préforme rigidifiée ;
f) on fournit un moule d'injection dans lequel on place ladite préforme rigidifiée ;
g) on injecte dans ledit moule d'injection un liant comprenant une résine thermodurcissable afin d'imprégner toute la préforme rigidifiée et de maintenir la disposition relative entre les fils (20a, 20b, 22) de la préforme rigidifiée;
h) on chauffe ledit moule d'injection ; et
i) on sort du moule une pièce moulée composite présentant sensiblement la forme et les dimensions de ladite aube,
**caractérisé en ce que** pendant l'étape c) on réalise ladite prédéformation en plaçant la préforme découpée (10a) dans le logement (26) délimité par un moule de conformation (24), **en ce que** pendant l'étape d) on réalise ledit pré-compactage de ladite préforme prédéformée (10b) en utilisant un outil de compactage (128) mobile et coopérant avec le moule de conformation (24), **en ce que**, pendant l'étape d), au moins la partie de pied (14) de la préforme (10b) est pré-compactée, et **en ce que** la préforme (10b) est pré-compactée en commençant par le milieu et en allant progressivement jusqu'au bord de la préforme (10b).

5. Procédé selon la revendication 4, dans lequel ledit outil de compactage (128) comprend au moins trois blocs de compactage séparés (128₁-128₇) et, lors de l'étape d), le bloc de compactage (128) est descendu en direction du moule de conformation (24) de façon que lesdits blocs de compactage descendent un à un en direction du moule de conformation (24) selon un ordre commençant par une portion centrale de la préforme puis chaque portion adjacente à la précédente, de manière à compacter toute une largeur de la préforme (10b).

6. Procédé selon les revendications 4 ou 5, dans lequel pendant les étapes c) et d) on utilise un ensemble de compactage selon l'une quelconque des revendications 1 à 3.

## Patentansprüche

1. Verdichtungsanordnung für einen gewebten Vorformling, der durch dreidimensionales Weben von Fäden (20) erhalten wird und dazu bestimmt ist, eine Verbundturbomaschinenschaufel zu bilden, wobei der Vorformling sowohl das Blatt (12), den Fuß (14) der Schaufel sowie zwischen dem Blatt (12) und dem Fuß (14) die Stelze der Schaufel (13) umfasst, wobei die Verdichtungsanordnung eine Gestaltungsform (24), welche eine nach oben offene Aufnahme (26) begrenzt, die geeignet ist, einen gewebten Vorformling aufzunehmen, und ein Verdichtungswerkzeug (128) umfasst, welches vertikal beweglich ist und mit der Gestaltungsform (24) zusammenwirkt, um eine Verdichtungsanordnung zu bilden, die ermöglicht, den Vorformling (10b) zu verdichten, wenn er in der Aufnahme (26) angeordnet ist, **dadurch gekennzeichnet, dass** das Verdichtungswerkzeug (128) wenigstens einen Fußabschnitt (128A) umfasst, wobei die Verdichtungsanordnung eine Längsrichtung und eine zu der Längsrichtung parallele, vertikale Mittelebene (PM) definiert, wobei das Verdichtungswerkzeug (128) wenigstens drei getrennte Verdichtungsblöcke (128₁ - 128₇) umfasst, darunter ein mittlerer Verdichtungsblock (128₁), welcher durch die Mittelebene (PM) verläuft, und zwei seitliche Verdichtungsblöcke (128₆, 128₇), welche an den seitlichen Enden des Verdichtungswerkzeugs (128) gelegen sind, wobei die Verdichtungsblöcke geeignet sind, unabhängig einer nach dem anderen, beginnend mit dem mittleren Verdichtungsblock (128₁), in Richtung der Gestaltungsform (24) hinunterzugehen.

2. Verdichtungsanordnung nach Anspruch 1, **dadurch gekennzeichnet, dass** die Verdichtungsblöcke geeignet sind, einer nach dem anderen in Richtung der Gestaltungsform (24) hinunterzugehen, beginnend mit dem mittleren Verdichtungsblock (128₁), dann jeder Verdichtungsblock der zu dem vorhergehend hinuntergegangenen benachbart ist, und dies bis zu dem seitlichen Verdichtungsblock (128₆, 128₇), um eine gesamte Breite des Vorformlings (10b) zu verdichten.

3. Verdichtungsanordnung nach einem der Ansprüche 1 oder 2, **dadurch gekennzeichnet, dass** das Verdichtungswerkzeug (128) wenigstens ein Fenster (132) umfasst, das ermöglicht, die Position von wenigstens einem Tracerfaden (22) sichtbar zu machen, wenn der Vorformling in der Aufnahme (26) angeordnet ist.

4. Verfahren zur Herstellung einer Verbundturbomaschinenschaufel, das die folgenden Schritte umfasst:
a) Herstellen eines Vorformlings durch dreidimensionales Weben von Fäden (20a, 20b, 22), wobei der Vorformling sowohl das Blatt (12), den Fuß (14) der Schaufel sowie zwischen dem Blatt (12) und dem Fuß (14) die Stelze der Schaufel (13) umfasst, wobei die Fäden (20a, 20b, 22) visuell erkennbare Tracerfäden (22), die wenigstens an der Oberfläche des Vorformlings angeordnet sind, umfassen,
b) Zuschneiden des Vorformlings unter Unversehrtlassen einer Reihe von Tracerfäden (22), die entlang einer Bezugsseite (16) des Vorformlings gelegen sind, wodurch ein zugeschnittener Vorformling (10a) bereitgestellt wird, der geeignet ist, die Form und die Abmessungen der Bestandteile der Schaufel anzunehmen,
c) Vorverformen des zugeschnittenen Vorformlings (10a), wodurch ein vorverformter Vorformling (10b) bereitgestellt wird,
d) Durchführen einer Vorverdichtung des vorverformten Vorformlings (10b), wodurch ein vorverdichteter Vorformling (10c) bereitgestellt wird,
e) Durchführen eines Befeuchtens und eines Trocknens des vorverdichteten Vorformlings (10c), wodurch ein versteifter Vorformling bereitgestellt wird,
f) Bereitstellen einer Spritzform, in welcher der versteifte Vorformling angeordnet wird,
g) Einspritzen eines Bindemittels, das ein in Wärme aushärtendes Harz umfasst, in die Spritzform, um den gesamten versteiften Vorformling zu imprägnieren und die Relativanordnung zwischen den Fäden (20a, 20b, 22) des versteiften Vorformlings aufrechtzuerhalten,
h) Erhitzen der Spritzform und
i) Herausnehmen eines Verbundformteils, das im Wesentlichen die Form und die Abmessungen der Schaufel aufweist, aus der Form,
**dadurch gekennzeichnet, dass** während des Schrittes c) die Vorverformung dadurch vollzogen wird, dass der zugeschnittene Vorformling (10a) in der durch eine Gestaltungsform (24) begrenzten Aufnahme (26) angeordnet wird, dass während des Schrittes d) die Vorverdichtung des vorverformten Vorformlings (10b) unter Verwendung eines beweglichen und mit der Gestaltungsform (24) zusammenwirkenden Verdichtungswerkzeugs (128) durchgeführt wird, dass während des Schrittes d) wenigstens der Fußteil (14) des Vorformlings (10b) vorverdichtet wird und dass der Vorformling (10b) vorverdichtet wird, indem mit der Mitte begonnen und schrittweise bis zum Rand des Vorformlings (10b) gegangen wird.

5. Verfahren nach Anspruch 4, bei dem das Verdichtungswerkzeug (128) wenigstens drei getrennte Verdichtungsblöcke (128₁-128₇) umfasst und während des Schrittes d) der Verdichtungsblock (128) in Richtung der Gestaltungsform (24) heruntergefahren wird, so dass die Verdichtungsblöcke einer nach dem anderen in Richtung der Gestaltungsform (24) in einer Reihenfolge beginnend mit einem mittleren Abschnitt des Vorformlings, dann jeder zu dem vorhergehenden benachbarte Abschnitt, hinuntergehen, um eine gesamte Breite des Vorformlings (10b) zu verdichten.

6. Verfahren nach den Ansprüchen 4 oder 5, bei dem während der Schritte c) und d) eine Verdichtungsanordnung nach einem der Ansprüche 1 bis 3 verwendet wird.

## Claims

1. A compaction assembly for a woven preform obtained by three-dimensional weaving of yarns (20) and intended to form a composite turbomachine blade, said preform comprising parts predefining the airfoil (12), the foot (14) of the blade and, between the airfoil (12) and the foot (14), the root of the blade (13), the compaction assembly comprising a shaping mold (24) delimiting an upwardly open housing (26), suitable for receiving a woven preform (10b), and a compaction tool (128), that is vertically moveable and cooperates with the shaping mold (24) for forming a compaction assembly allowing compaction of said preform (10b) when placed in the housing (26), **characterized in that** the compaction tool (128) comprises at least one foot portion (128A) and wherein said compaction assembly defines a longitudinal direction and a vertical middle plane (PM) parallel to the longitudinal direction, the compaction tool (128) comprising at least three separate compaction blocks (128₁-128₇), among which are a central compaction block (128₁) passing through said middle plane (PM) and two side compaction blocks (128₆, 128₇) located at the side edges of said compaction tool (128), said compaction blocks being adapted to move downwards one by one towards the shaping mold (24) in an independent way, starting with the central compaction block (128₁).

2. The compaction assembly according to claim 1, **characterized in that** said compaction blocks are configured to move downwards one by one towards the shaping mold (24), starting with said central compaction block (128₁) and then with each compaction block adjacent to the one having moved downward previously, and this until the side compaction block (128₆, 128₇), so as to compact a whole width of said preform (10b).

3. The compaction assembly according to, any one of claims 1 or 2, **characterized in that** the compaction tool (128) has at least one window (132) allowing a view of the position of at least one tracer yarn (22) when the preform is placed in the housing (26).

4. A method for manufacturing a composite turbomachine blade, comprising the following steps:
a) a preform is made by three-dimensional weaving of yarns (20a, 20b, 22), said preform comprising the airfoil (12), the foot (14) of the blade and, between the airfoil (12) and the foot (14), the root of the blade (13), the yarns (20a, 20b, 22) comprising visually identifiable tracer yarns (22) positioned at least at the surface of the preform;
b) the preform is cut out while leaving intact a series of tracer yarns (22) located along a reference face (16) of the preform, whereby a cut-out preform (10a) configured to predefine the shape and the dimensions of the constitutive portions of the blade is provided;
c) the cut-out preform (10a) is pre-deformed, whereby a pre-deformed preform (10b) is provided;
d) pre-compaction of said pre-deformed preform (10b) is achieved, whereby a pre-compacted preform (10c) is provided;
e) wetting and drying the pre-compacted preform (10c) are performed, whereby a stiffened preform is provided;
f) an injection mold is provided in which said stiffened preform is placed;
g) a binder comprising a thermosetting resin is injected into said injection mold in order to impregnate the whole stiffened preform and to maintain the relative arrangement between the yarns (20a, 20b, 22) of the stiffened preform;
h) said injection mold is heated; and
i) a composite molded part is extracted from the mold, substantially having the shape and the dimensions of said blade,
wherein, during step c), said pre-deformation is achieved by placing the cut-out preform (10a) in a housing (26) delimited by a shaping mold (24) and in that, during step d), the pre-compaction is achieved by using a moveable compaction tool (128) cooperating with the shaping mold (24)
wherein, during step d), at least the foot part (12) of the preform (10b) is pre-compacted, and
wherein the preform (10b) is pre-compacted starting with the middle and gradually advancing until the edge of the preform (10b).

5. The method according to claim 4, wherein the compaction tool (128) comprises at least three separate compaction blocks (1281-1287) and, during step d), the compaction tool (128) is moved downwards towards the shaping mold (24) in such a way that said compaction blocks move downwards one by one towards the shaping mold (24) in an order starting with a central portion of the preform and then each portion adjacent to the previous one, so that a whole width of the preform (10b) is compacted.

6. The method according to claim 4 or 5, wherein, during steps c) and d), a compaction assembly according to any of claims 1 to 3 is used.
